(19) Europäisches Patentamt
European Patent Office
Office européen des brevets

(11) EP 3 865 538 A1

# (12) EUROPEAN PATENT APPLICATION

(43) Date of publication:
**18.08.2021 Bulletin 2021/33**

(21) Application number: **20157447.2**

(22) Date of filing: **14.02.2020**

(51) Int Cl.:
***C08J 9/00*** *(2006.01)* ***C08J 9/10*** *(2006.01)*
***C08K 5/5419*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sika Technology AG**
**6340 Baar (CH)**

(72) Inventors:
- **Ribot, Cendrine**
  **8953 Dietikon (CH)**
- **Clifford, Jeannette**
  **5620 Bremgarten (CH)**
- **Wolschleger, Leslie**
  **Clarkston, MI 48348 (US)**

(74) Representative: **Sika Patent Attorneys**
**c/o Sika Technology AG**
**Corp. IP Dept.**
**Tüffenwies 16**
**Postfach**
**8048 Zürich (CH)**

## (54) THERMALLY EXPANDABLE COMPOSITIONS WITH IMPROVED HUMIDITY STORAGE RESISTANCE

(57) The invention is directed to a thermally expandable composition comprising at least one polymer, optionally at least one free radical initiator, at least one chemical blowing agent, and silane groups. The invention is also related to baffle and/or a reinforcement element for hollow structures comprising the thermally expandable composition, to a process for manufacturing the baffle and/or reinforcement element, to use of the baffle and/or reinforcement element for sealing, baffling, or reinforcing of a cavity or a hollow structure, and to a method for sealing, baffling and/or reinforcing a cavity or hollow structure.



Printed by Jouve, 75001 PARIS (FR)

## Description

### Technical field

The present invention relates to thermally expandable compositions and use thereof for providing baffle and/or reinforcement elements. Such elements are particularly suitable for use in sealing, baffling, and/or reinforcing of hollow structures, for example cavities in a hollow structural part of an automotive vehicle.

### Background of the invention

Manufactured products often contain orifices and cavities or other hollow parts that result from the manufacturing process and/or that are designed into the product for various purposes, such as weight reduction. Automotive vehicles, for example, include several such orifices and cavities throughout the vehicle, including those in the vehicle's structural pillars and in the sheet metal of the vehicle doors. It is often desirable to seal such orifices and cavities so as to minimize noise, vibrations, fumes, dirt, water, humidity, and the like from passing from one area to another within the vehicle by means of sealing members or baffle elements built into the orifice or cavity. Likewise, such members or elements often fulfil an additional task of reinforcing the hollow structure of the manufactured product, for example an automotive part, so much that it becomes more resistant to mechanical stress but still maintains the low weight advantage of the hollow structure.

Such elements used for sealing, baffling or reinforcing often consist of a carrier, made of plastic, metal, or another rigid material, and one or more layers of a thermoplastic material attached to it which is able to expand its volume when heat or another physical or chemical form of energy is applied, but they can also be entirely made of expandable material. Using an adequate design, it is possible to insert the baffle or reinforcement element into the hollow part of the structure during the manufacturing process but also to leave the inner walls of the structure still accessible (or the cavities passable) to for example a liquid. For example, during the manufacture process of a vehicle, the hollow parts of a metal frame can still be largely covered by an electro-coating ("e-coat") liquid while the baffle or reinforcement elements are already inserted, and afterwards during a baking step, the expandable thermoplastic material of the baffle or reinforcement element expands to fill the cavities as intended.

The development of such baffles or reinforcement elements has led to highly advanced systems, where the expandable material is able to increase its volume by up to several thousand percent, forming a stable, cross-linked foam-like structure that fills the cavities and adheres to the walls of the structure intended to be sealed, baffled, or reinforced. Especially in automotive manufacturing, this has led to considerable weight reduction and excellent damping of noise or vibrations in the car body.

Currently employed thermally expandable compositions often consist of polymers such as ethylene-vinyl acetate polymers that can be cross-linked by radical initiators, most commonly peroxides. In order to obtain foams, these compositions furthermore contain blowing agents, the most widely used being azodicarbonamide (also called azodicarboxamide or azobisformamide) and 4,4'-oxydibenzenesulfonyl hydrazide (abbreviated OBSH). Under activation conditions, such as elevated temperature, curing of the cross-linkable network takes place, while simultaneously the blowing agent decomposes and releases gases. This leads to the above mentioned volume expansion and the formation of a stable foam, which in ideal cases fills the cavity as intended and adheres to its walls. Such a system is for example disclosed in DE 10 2011 080 223 A1.

However, before expanding and formation of as stable foam, known thermally expandable compositions are in particular susceptible to moisture and, therefore, have a rather limited storage stability. For example, water absorbed into the composition during storage in humid conditions can react with the free radical initiators reducing the crosslinking density, leading to a loss of expansion and formation of open cell structure. Furthermore, the lower expansion rate and open cell structure reduce the sealing capability of the material.

It is thus desirable to obtain thermally expandable compositions which have an improved humidity storage resistance, i.e. compositions that exhibit reduced expansion loss after storage in humid conditions at an elevated temperature.

### Summary of the invention

The object of the present invention is to provide a thermally expandable composition that is able to expand uniformly and to cure to form a stable foam structure over a wide range of temperatures and which composition exhibits improved stability against water/moisture. Furthermore, the produced foam should exhibit good adhesion to metallic, even oily, surfaces and other substrates commonly used in manufactured articles, in particular automotive vehicles.

The subject of the present invention is a thermally expandable composition as defined in claim 1.

It was surprisingly found out that compounds having hydrolysable silane groups can be used to improve the

humidity storage resistance of a thermally expandable composition. Without being bound to any theory it is believed that a small amount of the silane groups reacts with water during humidity storage, which results in partial crosslinking of the polymer chains before the baking step. Furthermore, at least a portion of the silane groups react during the baking process with the water absorbed by the material during the humidity storage resulting in further crosslinking of the polymer chains. The silane-crosslinking reactions, occurring either during the humidity storage or the baking step, compensate the loss in networking density caused by reaction between absorbed water and free radical crosslinking agent, such as peroxides.

One of the advantages of the thermally expandable composition of the present invention is that the humidity storage resistance can be improved without having a negative effect on other application relevant properties of the thermally expandable composition. The desired effect is also obtainable by using relatively low amounts of compounds containing hydrolysable silane groups.

Other subjects of the present invention are presented in other independent claims. Preferred aspects of the invention are presented in the dependent claims.

## Detailed description of the invention

The subject of the present invention is a thermally expandable composition comprising:

a) At least one polymer **P**,
b) Optionally at least one free radical initiator **I**, and
c) At least one chemical blowing agent **CBA**, and
d) Optionally at least one epoxy-functional polymer **EP**,
wherein the composition comprises silane groups of formula (I)

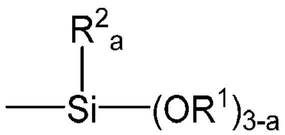

(I)

wherein $R^1$ represents an alkyl group with 1 to 8 carbon atoms, preferably with 1 to 5 carbon atoms, $R^2$ represents an alkyl group with 1 to 8 carbon atoms, preferably between 1 to 5 carbon atoms, and index a has a value of 0, 1 or 2, preferably 0 or 1.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "silane" designates compounds which in the first instance have at least one, customarily two or three, hydrolyzable groups bonded directly to the silicon atom via Si-O- bonds, more particularly alkoxy groups or acyloxy groups, and in the second instance have at least one organic radical bonded directly to the silicon atom via an Si-C bond. Silanes with alkoxy or acyloxy groups are also known to the person skilled in the art as organoalkoxysilanes and organoacyloxysilanes, respectively. Tetraalkoxysilanes, consequently, are not silanes under this definition.

Correspondingly, the term "silane group" designates the silicon-containing group bonded to the organic carbon radical via the Si-C bond. The silanes, and their silane groups, have the property of undergoing hydrolysis on contact with moisture. In so doing, they form organosilanols, these being organosilicon compounds containing one or more silanol groups (Si-OH groups) and, by subsequent condensation reactions, organosiloxanes, these being organosilicon compounds containing one or more siloxane groups (Si-O-Si groups).

The terms "silane-functionalized" and "silane-functional" designate compounds containing silane groups. The terms "silane-functionalized polymer" and "silane-functional polymer" accordingly, designate polymers, which contain at least one silane group.

The term "molecular weight" refers to the molar mass (g/mol) of a molecule or a part of a molecule, also referred to as "moiety". The term "average molecular weight" refers to number average molecular weight ($M_n$) of an oligomeric or polymeric mixture of molecules or moieties. The molecular weight may be determined by conventional methods, preferably by gel permeation-chromatography (GPC) using polystyrene as standard, styrene-divinylbenzene gel with porosity of 100 Angstrom, 1000 Angstrom and 10000 Angstrom as the column and tetrahydrofurane as a solvent, at 35°C.

The term "softening point" or "softening temperature" designates a temperature at which compound softens in a rubber-like state, or a temperature at which the crystalline portion within the compound melts. The softening point can be measured by a Ring and Ball method as defined in DIN EN 1238 standard.

The term "melting temperature" refers to a temperature at which a material undergoes transition from the solid to the liquid state. The melting temperature ($T_m$) is preferably determined by differential scanning calorimetry (DSC) according to ISO 11357-3 standard using a heating rate of 2 °C/min. The measurements can be performed with a Mettler Toledo DSC 3+ device and the $T_m$ values can be determined from the measured DSC-curve with the help of the DSC-software. In case the measured DSC-curve shows several peak temperatures, the first peak temperature coming from the lower temperature side in the thermogram is taken as the melting temperature ($T_m$).

The "amount or content of at least one component X" in a composition, for example "the amount of the at least one polymer P" refers to the sum of the individual amounts of all polymers P contained in the composition. For example, in case the at least one polymer P comprises 20 wt.-% of the total weight of the composition, the sum of the amounts of all polymers P contained in the composition equals 20 wt.-%.

The term "room temperature" designates a temperature of 23°C.

The amount of silane groups of formula (I) in the thermally expandable composition is not particularly restricted. However, it has been found out a minimum amount of moisture reactive groups is required to have an improved humidity resistance but also that increasing the amounts of silane groups above a certain limit results in decrease of the initial expansion rate before humidity storage, in particular at higher temperatures of above 185 °C.

According to one or more preferred embodiments, the thermally expandable composition comprises 0.05 - 10.0 wt.-%, preferably 0.15 - 7.5 wt.-%, more preferably 0.20 - 5.0 wt.-%, even more preferably 0.25 - 3.5 wt.-% of the silane groups of formula (I). Addition of silane groups to thermally expandable compositions in an amount falling within the above defined ranges has been found out to result in substantial improvement in humidity storage stability. In particular, such thermally expandable compositions stored for one week at a temperature of 40 °C and relative humidity of 100 % showed significantly lower expansion losses compared to reference compositions containing lower amounts silane groups of formula (I).

Preferably, at least a portion of the silane groups of formula (I) are bonded to the at least one polymer **P** and/or the thermally expandable composition further comprises at least one alkoxysilane **SI** of formula (II)

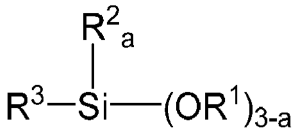

(II),

wherein $R^1$ and $R^2$ are as defined above and

$R^3$ represents a linear, branched, or cyclic alkenyl groups with 1 to 20 carbon atoms, preferably with 1 to 10 carbon atoms.

According to one or more embodiments, the at least one alkoxysilane **SI** of formula (I) is selected from the group consisting of vinyltrimethoxysilane, vinyltriethoxysilane, vinyl-tris(2-methoxyethoxy)silane, 3-methacryloxypropyltrimethoxysilane, 3-methacryloxypropyltriethoxysilane, vinyldimethylmethoxysilane, and vinylmethyldibutoxysilane, preferably from the group consisting of vinyltrimethoxysilane and vinyltriethoxysilane.

According to one or more embodiments, the at least one polymer **P** is a silane-functionalized polymer containing silane groups of formula (I).

Suitable silane-functionalized polymers to be used as the at least one polymer **P** can contain polymerized or grafted silane functionality, i.e. the silane groups of formula (I) may be present as part of a polymer backbone or grafted onto a polymer as a side chain.

According to one or more embodiments the at least one polymer **P** has been obtained by grafting alkoxysilanes of formula (II) onto polymer chains of one or more polymers or by copolymerizing alkoxysilanes of formula (II) with one or more comonomers. Suitable comonomers for copolymerization with alkoxysilanes of formula (II) include, for example, ethylene, propylene, 1-butene and higher $\alpha$-olefins, (meth)acrylate, and (meth)acrylic acid. The term "(meth)acrylate" designates in the present disclosure both acrylate and methacrylate.

According to one or more embodiments, the at least one polymer **P** has been obtained by grafting one or more alkoxysilanes of formula (II) onto at least one starting polymer, for example by reacting one or more alkoxysilanes of formula (II), the at least one starting polymer, and one or more peroxides, wherein the at least one starting polymer is preferably selected from the group consisting of polyethylene, ethylene-$\alpha$-olefin copolymers, polypropylene, propylene-$\alpha$-olefin copolymers, ethylene-vinyl acetate copolymers, olefin (meth)acrylate copolymers, olefin alkyl (meth)acrylate copolymers, and olefin (meth)acrylic acid copolymers.

The term "α-olefin" designates an alkene having the molecular formula $C_xH2_x$ (x corresponds to the number of carbon atoms), which features a carbon-carbon double bond at the first carbon atom (α-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure. The term "poly-α-olefin" designates homopolymers and copolymers obtained by polymerization or oligomerization of α-olefins or multiple distinct α-olefins.

According to one or more embodiments, the at least one polymer **P** is selected from the group consisting of silane-grafted ethylene-vinyl acetate copolymer, silane-grafted polyolefin, olefin silane copolymer, and olefin alkyl (meth)acrylate silane terpolymer, preferably from the group consisting of silane-grafted ethylene-vinyl acetate copolymer, olefin silane copolymer, and olefin alkyl (meth)acrylate silane terpolymer, more preferably from the group consisting of silane-grafted ethylene-vinyl acetate copolymer and olefin alkyl (meth)acrylate silane terpolymer.

According to one or more embodiments, the at least one polymer **P** comprises or is composed of at least one silane-grafted ethylene-vinyl acetate copolymer, wherein the at least one silane-grafted ethylene-vinyl acetate copolymer has preferably been obtained by reacting at least one ethylene-vinyl acetate copolymer with one or more alkoxysilanes of formula (II) and one or more organic peroxides. Generally, the expression "the at least one component X comprises at least one component N", such as "the at least one polymer **P** comprises at least one silane-grafted ethylene-vinyl acetate copolymer" is understood to mean in the context of the present disclosure that the composition comprises one or more silane-grafted ethylene-vinyl acetate copolymers as representatives of the at least one polymer **P**.

According to one or more embodiments, the at least one polymer **P** comprises or is composed of at least one silane-grafted ethylene-vinyl acetate copolymer, wherein the at least one silane-grafted ethylene-vinyl acetate copolymer has preferably been obtained by reacting at least one ethylene-vinyl acetate copolymer with one or more alkoxysilanes of formula (II) and one or more organic peroxides.

According to one or more embodiments, the at least one polymer **P** comprises or is composed of at least one olefin silane copolymer or olefin alkyl (meth)acrylate silane terpolymer, preferably of at least one olefin alkyl (meth)acrylate silane terpolymer.

According to one or more embodiments, the at least one polymer **P** comprises or is composed of at least one first silane-grafted ethylene-vinyl acetate copolymer **P1** and at least one second silane-grafted ethylene-vinyl acetate copolymer **P2** different from the at least one first silane-grafted ethylene-vinyl acetate copolymer **P1**, wherein the at least one first silane-grafted polymer **P1** has preferably been obtained by reacting at least one first ethylene-vinyl acetate copolymer with one or more alkoxysilanes of formula (II) and one or more organic peroxides and wherein the at least one second silane-grafted polymer **P2** has preferably been obtained by reacting at least one second ethylene-vinyl acetate copolymer different from the at least one first ethylene-vinyl acetate copolymer with one or more alkoxysilanes of formula (II) and one or more organic peroxides.

According to one or more embodiments, the weight ratio of the total amount of the at least one first silane-grafted ethylene-vinyl acetate copolymer **P1** and the at least one second silane-grafted ethylene-vinyl acetate copolymer **P2** is in the range of from 5:1 to 1:3, preferably from 3:1 to 1:2, more preferably from 2.5:1 to 1:1.

Preferably, the thermally expandable composition further comprises at least one free radical initiator **I**. All types of free radical initiators that that are known to undergo decomposition upon exposure to sufficient amount of energy, such as radiation, heat, or the like to generate radicals capable of initiating the desired curing (crosslinking) reactions are in principle considered suitable for use as the at least one free radical initiator **I**.

According to one or more embodiments, the at least one free radical initiator **I** is a peroxide initiator **PI**, preferably an organic peroxide.

Suitable peroxide initiators are essentially inert at room temperature (23 °C) and exhibit an activation temperature suitable for the intended purpose. For example, if the thermally expandable composition is to be used for providing a baffle and/or reinforcement element in automotive manufacturing, an activation temperature of in the range of 90 - 250 °C is typically preferred. Furthermore, it is advantageous that the at least one peroxide initiator **PI** has an activation temperature compatible with the decomposition temperature of the at least one chemical blowing agent **CBA**. If the above mentioned two temperatures differ too much, it may be more difficult to obtain a thermally expandable composition with optimal performance and stability.

It may furthermore be advantageous that the at least one peroxide initiator **PI** has a half-life of 10 h at a temperature in the range of 90 - 130 °C, as measured in benzene or in a similar non-polar solvent. For certain types of peroxide initiators other solvents than benzene may be more suitable for use in measurement of the half-life, such as, for example, toluene, triethyl phosphate or dibutyl phthalate. For ultra-low temperature embodiments, i.e. those optimized for expansion between 120 °C and 150 °C, peroxide initiators having a half-life of 10 h at temperatures in the range of 50 - 100 °C are preferred. It is furthermore advantageous that the at least one peroxide initiator **PI** is compatible and/or miscible with the polymer matrix of the thermally expandable composition. In some cases the compatibility of the peroxide initiator with the polymer matrix can be further improved by using processing aids and other compatibilizing additives.

Suitable peroxide initiators include, in particular organic peroxides. All types of organic peroxides that are known

to undergo decomposition by heat to generate radicals capable of initiating the desired curing (crosslinking) reactions are in principle considered suitable for use as the at least one peroxide initiator **PI**.

According to one or more embodiments, the at least one peroxide initiator **PI** is an organic peroxide, preferably selected from the group consisting of, keton peroxides, diacyl peroxides, peresters, perketals, and hydroperoxides. Examples of preferred peroxides include cumene hydroperoxide, t-butyl peroxide, bis(t-butylperoxy)-diisopropyl benzene, di(t-butylperoxy isopropyl) benzene, dicumyl peroxide, t-butylperoxy benzoate, di-alkylperoxy dicarbonate, diperoxyketals (such as 1,1-di-t-butylperoxy-3,3,5-trimethyl cyclohexane), keton peroxides (such as methyl ethyl keton peroxide), and 4,4-di-t-butylperoxy-n-butyl valerate.

Particularly suitable organic peroxides include 3,3,5,7,7-pentamethyl-1,2,4-trioxepane, 2,5-dimethyl-2,5-di(t-butylperoxy)-3-hexyne, di-t-butyl peroxide, 2,5-dimethyl-2,5-di(t-butylperoxy) hexane, t-butyl cumyl peroxide, di(t-butylperoxy isopropyl) benzene, dicumyl peroxide, butyl-4,4-di(t-butylperoxy) valerate, t-butylperoxy-2-ethylhexyl carbonate, 1,1-di(t-butylperoxy)-3,3,5-trimethyl cyclohexane, t-butylperoxy benzoate, di(4-methylbenzoyl) peroxide, and dibenzoyl peroxide.

According to one or more embodiments, the at least one peroxide initiator **PI** is selected from the group consisting of dicumyl peroxide, and/or di(t-butylperoxyisopropyl) benzene, and/or 1,1-di(t-butylperoxy)-3,3,5-trimethyl cyclohexane.

These are commercially available, for example, under the trade names of Perkadox® BC-40B-PD from Akzo Nobel and Peroxan® DC-40 PKfrom Pergan (dicumyl peroxide); under the trade names of Perkadox® 14-40B-PD Akzo Nobel and Peroxan® BIB-40 P from Pergan (di(t-butylperoxyisopropyl) benzene); and under the trade name of Peroxan® PK295 from Pergan (di(t-butylperoxyisopropyl) benzene).

According to one or more embodiments, the at least one peroxide initiator **PI** comprises 0.01 - 10.0 wt.-%, preferably 0.025 - 7.5 wt.-%, more preferably 0.05 - 5.0 wt.-%, even more preferably 0.1 - 3.5 wt.-%, still more preferably 0.15 - 3.5 wt.-%, most preferably 0.25 - 3.0 wt.-% of the total weight of the thermally expandable composition.

It may furthermore be advantageous that the at least one peroxide initiator **PI** is present in the thermally expandable composition as immobilized on a support material, such as silica, kaolin, and/or calcium carbonate, or other suitable materials. This approach may facilitate handling, dosage, and evenly distribution of the at least one peroxide initiator **PI** in the thermally expandable composition. Examples of immobilized organic peroxides include, for example, 40 wt.-% dicumyl peroxide on calcium carbonate, 40 wt.-% di(t-butylperoxyisopropyl) benzene on clay and silica, and 40 wt.-% 1,1-di(t-butylperoxy)-3,3,5-trimethyl cyclohexane on calcium carbonate. In these embodiments, the expression "the amount of the at least one peroxide initiator **PI**" refers to the amount of the active substance contained in the thermally expandable composition excluding the amount of the support material on which the at least one peroxide initiator **PI**, for example, an organic peroxide, has been immobilized.

According to one or more embodiments, the at least one free radical initiator **I** is an azo-initiator **AI**, preferably selected from the group consisting of azonitrile compounds, alkylazo compounds, and azoamide compounds.

Suitable azo initiators are essentially inert at normal room temperature (23 °C) and exhibit an activation temperature suitable for the intended purpose. For example, in case the thermally expandable composition is used for providing a baffle and/or reinforcement element in automotive manufacturing, an activation temperature in the range of 90 - 250 °C is typically preferred. Furthermore, it is advantageous that the at least one azo initiator **AI** has an activation temperature compatible with the decomposition temperature of the at least one chemical blowing agent **CBA**. If the above mentioned two temperatures differ too much, it may be more difficult to obtain a thermally expandable composition with optimal performance and stability.

It may furthermore be advantageous that the at least one azo initiator **AI** has a half-life of 10 h at a temperature in the range of 55 - 120 °C, as measured in toluene or in a similar non-polar solvent. For certain types of azo initiators, other solvents than toluene may be more suitable for use in measurement of the half-life, such as substituted (for example, chlorinated) benzene, methanol, or water. The choice of the suitable solvent depends mainly on the solubility of the azo initiator in the respective solvent. It is furthermore advantageous that the at least one azo initiator **AI** is compatible and/or miscible with the polymer matrix of the thermally expandable composition. In some cases the compatibility of the azo initiator with the polymer matrix can be further improved by using processing aids and other compatibilizing additives.

Suitable azo initiators to be used as the at least one azo initiator **AI** include, for example, 4,4'-azobis(4-cyanovaleric acid), 1,1'-azobis(cyclohexane-1-carbonitrile) (ACHN), azobisisobutyronitrile (AIBN), 2,2'-azobis(2-methylpropionamidine), 2,2'-azobis(2-methylpropionitrile), di-tert-butyl-4,4-azobis-(4-cyanoperoxypentanoate), di-tert-butyl-4,4-azobis-(4-cyanoperoxyhexanoate), di-tert-butyl-4,4-azobis-(4-cyanoperoxyheptanoate), dimethyl 2,2'-azobis(2-methylpropionate), 2,2'-azobis(2-methylbutyronitrile), 2,2'-azobis(N-butyl-2-methylpropionamide), 2,2'-azobis(2,4-dimethylvaleronitrile), 2,2'-azobis(2-methylpropionamidine)dihydrochloride, 2,2'-azobis[N-(2-carboxyethyl)-2-methylpropionamidine]tetrahydrate, 2,2'-azobis[2-(2-imidazolin-2-yl)propane], 2,2'-azobis[2-methyl-N-(2-hydroxyethyl)propionamide].

According to one or more embodiments, the at least one azo initiator **AI** is selected from the group consisting of azobisisobutyronitrile (AIBN), 1,1'-azobis(cyclohexane-1-carbonitrile) (ACHN), and 2,2'-azobis[2-methyl-N-(2-hydroxyethyl)propionamide].

According to one or more embodiments, the at least one azo initiator **AI** comprises 0.1 - 10.0 wt.-%, preferably

0.15 - 7.5 wt.-%, more preferably 0.25 - 5.0 wt.-%, even more preferably 0.25 - 3.5 wt.-%, still more preferably 0.35 - 3.5 wt.%, most preferably 0.5 - 3.5 wt.-% of the total weight of the thermally expandable composition.

The thermally expandable composition further comprises at least one chemical blowing agent **CBA**. Chemical blowing agents are organic or inorganic compounds that decompose under influence of, for example temperature or humidity, while at least one of the formed decomposition products is a gas. Commonly used chemical blowing agents include both exothermic and endothermic chemical blowing agents, such as azo compounds, hydrazides, nitroso compounds, carbamates, carbazides, bicarbonates, polycarboxylic acids, and salts of polycarboxylic acids.

Suitable exothermic chemical blowing agents for use as the at least one chemical blowing agent **CBA** include, for example, azodicarbonamide, azoisobutytronitrile, azocyclohexyl nitrile, dinitrosopentamethylene tetramine, azodiamino benzene, benzene-1,3-sulfonyl hydrazide, calcium azide, 4,4'-diphenyldisulphonyl azide, p-toluenesulphonyl hydrazide, p-toluenesulphonyl semicarbazide, 4,4'-oxybis(benzenesulphonylhydrazide), trihydrazino triazine, and N,N'-dimethyl-N,N'-dinitrosoterephthalamide, and combinations thereof and the like.

According to one or more embodiments, the at least one chemical blowing agent **CBA** comprises or consists of one or several selected from the group consisting of azodicarbonamide, dinitrosopentamethylene tetramine, and 4,4'-oxybis(benzenesulphonylhydrazide), most preferably azodicarbonamide.

Despite the fact that exothermic chemical blowing agents have been widely used in thermally expandable compositions, especially in automotive industry, it may be preferred to provide a thermally expandable composition, which is free of them. Exothermic blowing agents may not always be preferred since they have been found to have potential to trigger respiratory sensitivity, are generally not safe from a toxicological point of view, or have a risk of explosion. Furthermore, by-products such as ammonia, formamide, formaldehyde or nitrosamines are released during decomposition of exothermic blowing agents and these substances have been classified as hazardous substances and their use is prohibited in the construction of automobiles.

According to one or more further embodiments, the at least one chemical blowing agent **CBA** is an endothermic chemical blowing agent. Endothermic chemical blowing agents have the advantage that they are not hazardous or explosive, and that fewer volatile organic compounds (VOCs) are created during their decomposition. The decomposition products are essentially carbon dioxide and water.

According to one or more embodiments, the at least one chemical blowing agent **CBA** is an endothermic chemical blowing agent comprising at least one organic acid. Suitable organic acids include to be used in the endothermic chemical blowing agent include, for example, monocarboxylic acids, such as acetic acid and propionic acid, as well as solid polycarboxylic acids, for example solid, hydroxy-functionalized or unsaturated dicarboxylic, tricarboxylic, tetracarboxylic or polycarboxylic acids, such as citric acid, tartaric acid, malic acid, fumaric acid, and maleic acid.

According to one or more embodiments, the at least one chemical blowing agent **CBA** comprises at least 85 wt.-%, preferably at least 90 wt.-%, more preferably at least 95 wt.-%, even more preferably at least 97.5 wt.-%, still more preferably at least 99 wt.-%, based on the total weight of the at least one chemical blowing agent **CBA**, of the at least one organic acid.

According to one or more embodiments, the at least one organic acid is a multifunctional organic acid having at least two acidic functional groups, preferably at least two carboxylic groups. Partially esterified multifunctional organic acids having at least one free acidic functional group, in particular at least one free carboxylic group, are also suitable. According to one or more embodiments, the at least one organic acid has a molecular weight of not more than 1000 g/mol, preferably not more than 750 g/mol, more preferably not more than 500 g/mol.

According to one more embodiments, the at least one chemical blowing agent **CBA** comprises or consists of the at least one organic acid selected from the group consisting of citric acid, tartaric acid, malic acid, fumaric acid, and maleic acid, preferably citric acid.

The at least one organic acid may be present in the thermally expandable composition in free acid form, i.e. with protonated acidic functional groups, or as a salt with deprotonated acidic functional groups, for example as a carboxylate salt or as a mixture of these. Suitable cations for the carboxylate salts include, for example, $Li^+$, $Na^+$, $K^+$, $NH_4^+$, $Ca_2^+$, $Mg_2^+$, and the like. According to one or more embodiments, the at least one organic acid is present in the thermally expandable composition in free acid form.

According to one or more embodiments, the at least one chemical blowing agent **CBA** has a maximum decomposition peak temperature measured by Differential Scanning Calorimetry (DSC) in the range of 135 - 235 °C, preferably 150 - 225 °C, more preferably 155 - 200 °C, even more preferably 160 - 200 °C. Preferably, the maximum decomposition peak measured by DSC is determined by a DSC822e differential scanning calorimeter from Mettler-Toledo by keeping the sample for 2 min at 25 °C, then heating the sample from 25°C to 280 °C at a rate of 5°C/min, then keeping the sample for 2 min at 280 °C and finally cooling the sample from 280 °C to 25 °C at a rate of 10°C/min.

The amount of the at least one chemical blowing agent **CBA** contained in the thermally expandable composition is not particularly restricted and the preferred amount depends on the desired expansion rate. According to one or more embodiments, the at least one chemical blowing agent **CBA** comprises 1 - 20 wt.-%, preferably 2.5 - 15 wt.-%, more preferably 5 - 15 wt.-%, even more preferably 5 - 10 wt.-% of the total weight of the thermally expandable composition.

According to one or more embodiments, the thermally expandable composition further comprises at least one epoxy functional polymer **EP**.

Preferably, the at least one epoxy-functional polymer **EP** has an average of more than one epoxy group per molecule. Furthermore, the at least one epoxy-functional polymer **EP** may contain either polymerized or grafted epoxy functionality, i.e. the epoxide moieties may be present as part of a polymer backbone or grafted onto a polymer as a side chain. Such epoxy-functional polymers may be added to the thermally expandable composition, for example, as adhesion promoters to improve the adhesion of the expanded composition on oily surfaces, such as oily steel, as for example commonly found in automotive manufacturing.

According to one or more embodiments, the at least one epoxy-functional polymer **EP** is selected from the group consisting of olefin glycidyl (meth)acrylate copolymers, olefin alkyl (meth)acrylate glycidyl (meth)acrylate terpolymers, and glycidyl methacrylate grafted (co)polymers. The term "(co)polymer" is understood to include homopolymers, copolymers, random copolymers, block copolymers, and terpolymers.

Suitable olefin glycidyl (meth)acrylate copolymers to be used as the at least one epoxy-functional polymer **EP** include, for example, copolymers of ethylene, propylene, or butylene with glycidyl acrylate (GA) or with glycidyl (meth)acrylate (GMA).

According to one or more embodiments, the at least one epoxy-functional polymer **EP** comprises at least one olefin glycidyl (meth)acrylate copolymer **EP1**, preferably selected from the group consisting of ethylene glycidyl (meth)acrylate copolymers, propylene glycidyl (meth)acrylate copolymers, and butylene glycidyl (meth)acrylate copolymers, more preferably from the group consisting of ethylene glycidyl (meth)acrylate copolymers, in particular ethylene glycidyl methacrylate copolymers.

According to one or more embodiments, the at least one olefin glycidyl (meth)acrylate copolymer **EP1** has

- a content of glycidyl methacrylate of 1 - 50 wt.-%, more preferably 2 - 25 wt.-% and/or
- a melt flow index, determined according to ISO 1133 (190 °C/2.16 kg), of not more than 100 g/10 min, preferably not more than 75 g/10 min, more preferably not more than 50 g/10 min, even more preferably not more than 25 g/10 min and/or
- a melting temperature ($T_m$) as determined by DSC measurements conducted according to ISO 11357-3 of at or below 150 °C, preferably at or below 135 °C, in particular in the range of 75 - 150 °C, preferably 85 - 135 °C, more preferably 90 - 125 °C.

According to one or more embodiments, the at least one epoxy-functional polymer **EP** is composed of the at least one olefin glycidyl (meth)acrylate copolymer **EP1**, preferably selected from the group consisting of ethylene glycidyl (meth)acrylate copolymers, propylene glycidyl (meth)acrylate copolymers, and butylene glycidyl (meth)acrylate copolymers, more preferably from the group consisting of ethylene glycidyl (meth)acrylate copolymers, in particular ethylene glycidyl methacrylate copolymers. Generally, the expression "the at least one component X is composed of at least one component XN", such as "the at least one epoxy-functional polymer **EP** is composed of the at least one olefin glycidyl (meth)acrylate copolymer **EP1**" is understood to mean in the context of the present disclosure that the at least one epoxy-functional polymer **EP** is selected from the group consisting of the at least one olefin glycidyl (meth)acrylate copolymer **EP1**.

Suitable olefin alkyl (meth)acrylate glycidyl (meth)acrylate terpolymers to be used as the at least one epoxy-functional polymer **EP** include, for example, terpolymers, in particular random terpolymers of ethylene and alkyl (meth)acrylate with glycidyl acrylate (GA) or with glycidyl methacrylate (GMA), wherein the alkyl group of the alkyl (meth)acrylate is preferably selected from the group consisting of methylene, ethylene, propylene, and butylene, in particular methylene or butylene.

Preferred olefin alkyl (meth)acrylate glycidyl (meth)acrylate terpolymers include ethylene methyl acrylate glycidyl acrylate terpolymers (E/MA/GA), ethylene ethyl acrylate glycidyl acrylate terpolymers (E/EA/GA), ethylene propyl acrylate glycidyl acrylate terpolymers (E/PA/GA), ethylene butyl acrylate glycidyl acrylate terpolymers (E/BA/GA), ethylene methyl methacrylate glycidyl acrylate terpolymers (E/MMA/GA), ethylene ethyl methacrylate glycidyl acrylate terpolymers (E/EMA/GA), ethylene propyl methacrylate glycidyl acrylate terpolymers (E/PMA/GA), ethylene butyl methacrylate glycidyl acrylate terpolymers (E/BMA/GA), ethylene methyl acrylate glycidyl methacrylate terpolymers (E/MA/GMA), ethylene ethyl acrylate glycidyl methacrylate terpolymers (E/EA/GMA), ethylene propyl acrylate glycidyl methacrylate terpolymers (E/PA/GMA), ethylene butyl acrylate glycidyl methacrylate terpolymers (E/BA/GMA), ethylene methyl methacrylate glycidyl methacrylate terpolymers (E/MMA/GMA), ethylene ethyl methacrylate glycidyl methacrylate terpolymers (E/EMA/GMA), ethylene propyl methacrylate glycidyl methacrylate terpolymers (E/PMA/GMA), ethylene butyl methacrylate glycidyl methacrylate terpolymers (E/BMA/GMA).

According to one or more embodiments, the at least one epoxy-functional polymer **EP** comprises at least one olefin alkyl acrylate glycidyl (meth)acrylate terpolymer **EP2**, preferably selected from the group consisting of random terpolymers of ethylene, alkyl (meth)acrylate, and glycidyl methacrylate, wherein the alkyl group of the alkyl (meth)acrylate

is preferably selected from the group consisting of methylene, ethylene, propylene, and butylene, in particular methylene or butylene.

According to one or more embodiments, the at least one olefin alkyl acrylate glycidyl (meth)acrylate terpolymer **EP2** has

- a content of glycidyl methacrylate of 1 - 50 wt.-%, more preferably 2 - 25 wt.-% and/or
- a melt flow index, determined according to ISO 1133 (190 °C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150 °C, preferably at or below 135 °C, in particular in the range of 75 - 150 °C, preferably 85 - 135 °C, more preferably 90 - 125 °C.

According to one or more embodiments, the at least one epoxy-functional polymer **EP** is composed of the at least one olefin alkyl acrylate glycidyl (meth)acrylate terpolymer **EP2**, preferably selected from the group consisting of random terpolymers of ethylene, alkyl (meth)acrylate, and glycidyl methacrylate, wherein the alkyl group of the alkyl (meth)acrylate is preferably selected from the group consisting of methylene, ethylene, propylene, and butylene, in particular methylene or butylene.

Suitable glycidyl (meth)acrylate grafted (co)polymers to be used as the at least one epoxy-functional polymer **EP** include, for example, glycidyl methacrylate grafted olefin vinyl acetate copolymers, glycidyl methacrylate grafted ethylene-α-olefin copolymers, glycidyl methacrylate grafted propylene-α-olefin copolymers, glycidyl methacrylate grafted polyethylene, glycidyl methacrylate grafted polypropylene, and glycidyl methacrylate grafted olefin copolymer elastomers, glycidyl (meth)acrylate grafted styrene butadiene copolymers, and glycidyl (meth)acrylate grafted styrene ethylene butylene styrene terpolymers.

According to one or more embodiments, the at least one epoxy-functional polymer **EP** comprises at least one glycidyl methacrylate grafted (co)polymer **EP3**, preferably selected from the group consisting of glycidyl methacrylate grafted olefin vinyl acetate copolymers, glycidyl methacrylate grafted ethylene-α-olefin copolymers, glycidyl methacrylate grafted propylene-α-olefin copolymers, glycidyl methacrylate grafted polyethylene, glycidyl methacrylate grafted polypropylene, glycidyl (meth)acrylate grafted styrene butadiene copolymers, and glycidyl (meth)acrylate grafted styrene ethylene butylene styrene terpolymers.

According to one or more embodiments, the at least one glycidyl methacrylate grafted (co)polymer **EP3** has

- a content of glycidyl methacrylate (GMA) of 0.1 - 10 wt.-%, preferably 0.1 - 5 wt.-%, more preferably 0.1 - 3.5 wt.-%, even more preferably 0.1 - 2.5 wt.-%, in particular 0.1 - 1.5 wt.-% and/or
- a melt flow index, determined according to ISO 1133 (190 °C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150 °C, preferably at or below 135 °C, in particular in the range of 75 - 150 °C, preferably 85 - 135 °C, more preferably 90 - 125 °C.

According to one or more embodiments, the at least one epoxy-functional polymer **EP** is composed of the at least one glycidyl methacrylate grafted (co)polymer **EP3**, preferably selected from the group consisting of glycidyl methacrylate grafted olefin vinyl acetate copolymers, glycidyl methacrylate grafted ethylene-α-olefin copolymers, glycidyl methacrylate grafted propylene-α-olefin copolymers, glycidyl methacrylate grafted polyethylene, glycidyl methacrylate grafted polypropylene, glycidyl (meth)acrylate grafted styrene butadiene copolymers, and glycidyl (meth)acrylate grafted styrene ethylene butylene styrene terpolymers.

The at least one epoxy-functional polymer **EP**, if used, is preferably present in the thermally expandable composition in an amount of 0.5 - 35 wt.-%, preferably 2.5 - 30 wt.-%, more preferably 5-30 wt.-%, even more preferably 10-25 wt.-%, still more preferably 10-20 wt.-%, based on the total weight of the thermally expandable composition.

According to one or more embodiments, the thermally expandable composition further comprises at least one activator **A** comprising at least one compound of formula (III)

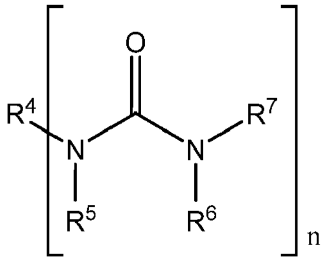

(III)

wherein $R^4$ and $R^5$ represent independently of each other hydrogen atoms or monovalent alkyl radicals with 1 to 10 carbon atoms which furthermore optionally comprise oxygen atoms, nitrogen atoms, and/or aromatic moieties or together form a divalent alkyl radical with 1 to 10 carbon atoms and which furthermore optionally comprises oxygen atoms, nitrogen atoms, and/or aromatic moieties;
$R^6$ and $R^7$ represent independently of each other hydrogen atoms or monovalent alkyl radicals with 1 to 10 carbon atoms which furthermore optionally comprise oxygen atoms or nitrogen atoms; and
index n has a value of 1 or 2.

Preferably, $R^4$ and $R^5$ represent independently of each other hydrogen atoms or monovalent linear or branched alkyl radicals having 1 to 10, preferably 1 to 5, more preferably 1 to 4 carbon atoms, which optionally together represent a divalent alkyl radical forming a ring structure with the adjacent nitrogen atom and/or $R^6$ and $R^7$ represent independently from each other hydrogen atoms or monovalent linear or branched alkyl radicals having 1 to 10, preferably 1 to 5, more preferably 1 to 4 carbon atoms, which optionally together represent a divalent alkyl radical forming a ring structure with the adjacent nitrogen atom.

Preferred compounds of formula (III) to be used as the at least one activator **A** include those, where $R^4$ and $R^5$ in formula (III) both represent hydrogen atoms and/or where $R^6$ and $R^7$ both represent ethyl or methyl, preferably methyl groups. Further preferred compounds of formula (III) include those where $R^4$, $R^5$, $R^6$, and $R^7$ in formula (III) all represent ethyl or methyl, preferably methyl groups, or where $R^4$, $R^5$, and $R^6$ represent ethyl or methyl, preferably methyl groups and $R^7$ represents a hydrogen atom, or where $R^4$ and $R^7$ both represent hydrogen atoms and $R^5$ and $R^6$ both represent ethyl or methyl, preferably methyl groups.

According to one or more embodiments, the at least one activator **A** comprises or consists of one or several compounds selected from the group consisting of urea, p-chlorophenyl-N,N-dimethylurea (monuron), 3-phenyl-1,1-dimethylurea (fenuron), 3,4-dichlorophenyl-N,N-dimethiyurea (diuron), N-methyl urea, N,N-dimethyl urea, N,N'-dimethyl urea, N,N,N'-trimethyl urea, N,N,N',N'-tetramethyl urea, and derivatives thereof where some or all methyl groups are ethyl groups instead.

Suitable urea activators are commercially available, for example, under the trade name of Dyhard® (from AlzChem Group AG), under the trade name of Omicure® (from CVC Thermoset Specialties), and under the trade name Amicure® (from Evonik).

According to one or more preferred embodiments, the at least one activator **A** comprises of consists of a compound according to formula (III) where $R^5$ and $R^6$ both represent hydrogen atoms and $R^4$ and $R^7$ both represent methyl groups, and n has a value of 1, thus describing N,N-dimethyl urea. This activator **A** is especially suitable for use together with the chemical blowing agent **CBA** comprising azodicarbonamide. This type of activator-blowing agent combination leads to exceptional expansion volumes and highly stable foam over the whole temperature range of at least 140°C to 200 °C, with at least 1000%, preferably at least 1100% expansion at every temperature within that range.

According to one or more further preferred embodiments, the at least one activator **A** comprises or consists of a compound of formula (III) where $R^4$, $R^5$, $R^6$, and $R^7$ all represent hydrogen atoms thus describing urea. This activator **A** is especially suitable for use together with the chemical blowing agent **CBA** comprising 4,4'-oxybis(benzenesulphonyl hydrazide). This type of activator-blowing agent combination leads to exceptional expansion volumes over the whole temperature range of at least 140°C to 200 °C, with at least 1000%, preferably at least 1100% expansion at every temperature within that range.

The at least one activator **A**, if used, is preferably present in the thermally expandable composition in an amount of 1 - 10 wt.-%, more preferably 1 - 9 wt.-%, even more preferably 1.5 - 8 wt.-%, based on the total weight of the thermally expandable composition.

It is strongly advised to optimize the amount of the at least one activator **A** relative to the amount of the at least one chemical blowing agent **CBA**. For example, it may be preferred to use the at least one activator **A** in an amount of 10 - 80 wt.-%, more preferably 12-65 wt.-%, even more preferably 15-55 wt.-%, still more preferably 20 - 45 wt.-%, based on the total weight of the at least one chemical blowing agent **CBA** contained in the thermally expandable composition.

It may also be advantageous that the thermally expandable composition comprises at least one secondary

activator **SA** in combination with the at least one activator **A**. Examples of compounds suitable for use as the at least one secondary activator **SA** include, for example, zinc compounds, such as zinc oxide, zinc acetate, zinc stearate, zinc bis(p-toluenesulphinate), or zinc bis(benzenesulphinate), titanium oxide and magnesium oxide, and fatty acids having at least 6 carbon atoms, such as stearic acid and montanic acid. Preferred secondary activators are zinc compounds, especially zinc oxide, and mixtures of zinc compounds, especially mixtures of zinc oxide and zinc acetate and fatty acids having at least 6 carbon atoms. These types of secondary activators can be added to the thermally expandable composition in an amount of 1 - 10 wt.-%, preferably 1.25 - 7.5 wt.-%, more preferably 1.4 - 5 wt.-%, based on the total weight of the thermally expandable composition.

It is strongly advised also for the optional secondary activators to optimize their amount relative to the amount of the at least one blowing agent **CBA**. For example, it may be preferred that the at least one secondary activator **SA** is used in an amount of 10 - 80 wt.-%, more preferably 12 - 65 wt.-%, even more preferably 15-55 wt.-%, still more preferably 20 - 45 wt.-%, based on the weight of the at least one chemical blowing agent **CBA** contained in the thermally expandable composition.

According to one or more embodiments, the thermally expandable composition comprises at least one secondary activator **SA** selected from the group consisting of zinc oxide, zinc acetate, zinc stearate, zinc bis(p-toluenesulphinate), zinc bis(benzenesulphinate), and fatty acids having at least 6 carbon atoms.

According to one or more embodiments, the thermally expandable composition comprises at least one first secondary activator **SA1** selected from the group consisting of zinc oxide, zinc acetate, zinc stearate, zinc bis(p-toluenesulphinate), zinc bis(benzenesulphinate), preferably zinc oxide and at least one second secondary activator **SA2** selected from the group consisting of fatty acids having at least 6 carbon atoms, preferably steric acid.

According to one or more embodiments, the thermally expandable composition further comprises at least one co-agent **CA** comprising at least one multifunctional acrylate with an acrylate functionality of at least 2, preferably between 2 and 6 and preferably having a molecular weight of less than 2500 g/mol, more preferably less than 1000 g/mol.

Such multifunctional acrylates can improve the cross-linking of polymer components contained in the thermally expansible composition and aid in obtaining a stable foam structure. The at least one co-agent **CA**, if used, is preferably present in the thermally expandable composition in an amount of 0.05 - 5.0 wt.-%, more preferably 0.1 - 3.5 wt.-%, even more preferably 0.25 - 3.0 wt.-%, still more preferably 0.35 - 2.0 wt.-%, based on the total weight of the thermally expandable composition.

Suitable multifunctional acrylates with a functionality of 2 to be used as the at least one co-agent **CA** include, for example, ethylene glycol dimethacrylate, diethylene glycol dimethacrylate, triethylene glycol dimethacrylate, triethylene glycol diacrylate, tripropylene glycol dimethacrylate, 1,3-butanediol dimethacrylate, 1,4-butanediol dimethacrylate, 1,10-dodecanediol dimethacrylate, 1,6-hexandieol dimethacrylate, neopentylglycol dimethacrylate, and polybutylene glycol dimethacrylate, and hexanediol diacrylate. Most preferred acrylate with a functionality of 2 is hexanediol diacrylate.

Suitable multifunctional acrylates with a functionality of 3 or higher to be used as the at least one co-agent **CA** include, for example, glycerol triacrylate, pentaerythritol triacrylate, pentaerythritol trimethacrylate, trimethylolpropane triacrylate, trimethylolpropane trimethacrylate, tetramethylolmethane tetraacrylate, Di-(trimethylolpropane) tetraacrylate, pentraerythritol tetraacrylate, dipentaerythritol pentaacrylate, dipentaerythritol hexaacrylate, tri(2-methacryloxyethyl) trimellitate, tri(2-acryloxyethyl) isocyanurate, as well as their ethoxylated or propoxylated derivates. Most preferred multifunctional acrylates with functionality of 5 is dipentaerythritol pentaacrylate. Furthermore suitable are highly functional, hyperbranched acrylates with functionalities of between 6 and 16, or higher. Examples of such acrylates include hyperbranched polyester-polyacrylates.

According to one or more embodiments, the sum of the amounts of the at least one free radical initiator **I** and the at least one co-agent **CA**, if present in the thermally expandable composition, comprises 0.25 - 7.5 wt.-%, preferably 0.25 - 5.0 wt.-%, more preferably 0.5 - 3.5 wt.-%, even more preferably 0.75 - 2.5 wt.-% of the total weight of the thermally expandable composition.

According to one or more embodiments, the thermally expandable composition further comprises at least one thermoplastic polymer **TP**.

Principally all thermoplastic polymers and thermoplastic elastomers (TPE) are suitable for use as the at least one thermoplastic polymer **TP**. It goes without saying that the at least one thermoplastic polymer **TP** is different from the at least one polymer **P** and from the at least one epoxy-functional polymer **EP**.

Suitable polymers to be used as the at least one thermoplastic polymer **TP** include, for example, styrene-butadiene copolymers, styrene-isoprene copolymers, ethylene-vinyl acetate copolymers (EVA), olefin (meth)acrylate copolymers, olefin alkyl (meth)acrylate copolymers, olefin (meth)acrylic acid copolymers, polyolefins, and halogenated polyolefins, such as polyvinyl chloride (PVC). Particularly suitable olefin (meth)acrylate copolymers and olefin alkyl (meth)acrylate copolymers include, for example, ethylene-ethyl acrylate copolymers, ethylene-butyl acrylate copolymers (EBA), and ethylene-2-ethylhexyl acrylate copolymers.

Suitable thermoplastic polymers **TP** may contain unsaturated olefinic bonds and they can also contain functional groups other than epoxide groups, such as halogen, nitrile, thiol, hydroxyl, or carboxyl groups. It is however preferred

that the at least one thermoplastic polymer **TP** is free of functional groups, which may interfere with the curing mechanism of the thermally expandable composition. This approach offers a better controllability of the curing mechanism and secondary properties such as the adhesion properties.

According to one or more embodiments, the at least one thermoplastic polymer **TP** is a non-functionalized thermoplastic polymer, preferably selected from the group consisting of polyethylene, ethylene-$\alpha$-olefin copolymers, polypropylene, propylene-$\alpha$-olefin copolymers, ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers.

According to one or more embodiments, the at least one thermoplastic polymer **TP** has

- a melt flow index determined according to ISO 1133 (190 °C/2.16 kg) of not more than 250 g/10 min, preferably not more than 200 g/10 min, even more preferably not more than 175 g/10 min and/or
- a melting temperature ($T_m$) as determined by DSC measurements conducted according to ISO 11357-3 of at or below 150 °C, preferably at or below 125 °C, more preferably at or below 100 °C.

According to one or more embodiments, the at least one thermoplastic polymer **TP** comprises at least one first non-functionalized thermoplastic polymer **TP1** and at least one second non-functionalized thermoplastic polymer **TP2** different from the at least one first non-functionalized thermoplastic polymer **TP1**, wherein the at least one first and second non-functionalized thermoplastic polymers **TP1** and **TP2** are preferably selected from the group consisting of ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers.

According to one or more embodiments, the at least one first non-functionalized thermoplastic polymer **TP1** has a melt flow index determined according to ISO 1133 (190 °C/2.16 kg) of at least 15 g/10 min, more preferably at least 20 g/10 min, even more preferably at least 25 g/10 min, in particular 25 - 200 g/10 min, preferably 30 - 175 g/10 min and/or the at least one second non-functionalized thermoplastic polymer **TP2** has a melt flow index determined according to ISO 1133 (190 °C/2.16 kg) of not more than 25 g/10 min, more preferably not more than 15 g/10 min, even more preferably not more than 10 min, in particular 1 - 10 g/10 min, preferably 1 - 7.5 g/10 min.

According to one or more embodiments, the weight ratio of the amount of the at least one first non-functionalized thermoplastic polymer **TP1** and the at least one second non-functionalized thermoplastic polymer **TP2** is in the range of from 5:1 to 1:3, preferably from 3:1 to 1:2, more preferably from 2.5:1 to 1:1.

According to one or more embodiments, the at least one thermoplastic polymer **TP** is composed of the at least one first non-functionalized thermoplastic polymer **TP1** and the at least one second non-functionalized thermoplastic polymer **TP2**, wherein the at least one first and second non-functionalized thermoplastic polymers **TP1** and **TP2** are preferably selected from the group consisting of ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers.

According to one or more embodiments, the sum of the amount of the at least one polymer **P** and the at least one thermoplastic polymer **TP** comprises 25 - 80 wt.-%, preferably 30 - 75 wt.-%, more preferably 35 - 70 wt.-%, even more preferably 40 - 65 wt.-%, still more preferably 40 - 60 wt.-% of the total weight of the thermally expandable composition.

Apart from the essential and optional ingredients listed above, the thermally expandable composition may contain other compounds commonly used in such compositions and known to the ordinarily person skilled in the art. These include, for example, tackifying resins, fillers, colorants, dispersion aids or homogenizers, stabilizers, and the like.

The term "tackifying resin" designates in the present document resins that in general enhance the adhesion and/or tackiness of a composition. The term "tackiness" refers in the present document to the property of a substance of being sticky or adhesive by simple contact, which can be measured, for example, as a loop tack. Preferred tackifying resins are tackifying at a temperature of 25 °C. Such tackifying resins lead to good adhesion on metal substrates, especially oiled metal substrates, both before and after foaming of the thermally expandable composition.

Suitable tackifying resins to be used in the thermally expandable composition have a relatively low average molecular weight ($M_n$), such as not more than 5000 g/mol, in particular not more than 3500 g/mol, preferably not more than 2500 g/mol and a softening point, determined by a Ring and Ball method according to DIN EN 1238, of at or below 180 °C, preferably at or below 160 °C, more preferably at or below 150 °C. Suitable tackifying resins include, in particular, synthetic resins, natural resins, and chemically modified natural resins.

The term "synthetic resin" designates in the present disclosure compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Suitable aliphatic monomers may include

$C_4$, $C_5$, and $C_6$ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2-methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Examples of aromatic monomer include $C_8$, $C_9$, and $C_{10}$ aromatic monomers. Typical aromatic monomers include, styrene, alphamethyl styrene, vinyl toluene, methoxy styrene, tertiary butyl styrene, chlorostyrene, coumarone, and indene monomers including indene, and methyl indene, and combinations thereof.

Suitable synthetic resins include, for example, hydrocarbon resins, coumarone-indene resins, polyindene resins, polystyrene resins, vinyl toluene-alphamethyl styrene copolymer resins, and alphamethyl styrene resins.

The term "hydrocarbon resin" designates in the present disclosure synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Suitable hydrocarbon resins are commercially available, for example, under the trade name of Wingtack®, Wingtack® Plus, Wingtack® Extra, and Wingtack® STS (all from Cray Valley); under the trade name of Escorez® 1000 series, Escorez® 2000 series, and Escorez® 5000 series (all from ExxonMobil Chemical); under the trade name of Novares® T series, Novares® TT series, Novares® TD series, Novares® TL series, Novares® TN series, Novares® TK series, and Novares® TV series (all from RÜTGERS Novares GmbH); and under the trade name of Kristalex®, Plastolyn®, Piccotex®, Piccolastic® and Endex® (all from Eastman Chemicals).

Tackifying resins, if used, are preferably included in the thermally expandable composition in an amount of 2 - 25 wt.-%, preferably 4-20 wt.-%, more preferably 5 - 15 wt.-%, based on the total weight of the thermally expandable composition.

Suitable fillers to be used in the thermally expandable composition include, for example, ground or precipitated calcium carbonate, lime, calcium-magnesium carbonate, talcum, gypsum, graphite, barite, pyrogenic or precipitated silica, silicates, mica, wollastonite, kaolin, feldspar, chlorite, bentonite, montmorillonite, dolomite, quartz, cristobalite, calcium oxide, aluminum hydroxide, magnesium oxide, hollow ceramic spheres, hollow glass spheres, hollow organic spheres, glass spheres, functionalized alumoxanes, and carbon black. Suitable fillers include both organically coated and also uncoated commercially available forms of the fillers included in the above presented list. Particularly suitable fillers include ground or precipitated calcium carbonate, calcium-magnesium carbonate, talcum, gypsum, graphite, barite, pyrogenic or precipitated silica, silicates, mica, wollastonite, carbon black, and mixtures thereof.

Fillers, if used, are preferably incorporated in the thermally expandable compositions in an amount of 1 - 20 wt.-%, more preferably 1 - 15 wt.-%, even more preferably 2.5 - 15 wt.-%, based on the total weight of the thermally expandable composition.

Colorants or dyes, such as pigments, for example on the basis of carbon black, may also be included in the thermally expandable composition. Their amount is preferably between 0.1 - 1 wt.-%, based on the total weight of the thermally expandable composition.

Preferably, the thermally expandable composition after curing has a volume increase compared to the uncured composition of at least 100 %, preferably at least 150 %, more preferably at least 250 %, whereby the volume increase is determined using the DIN EN ISO 1183 method of density measurement (Archimedes principle) in deionised water in combination with sample mass determined by a precision balance.

According to one or more embodiments, the thermally expandable composition after curing has a volume increase compared to the uncured composition in the range of 100 - 3000 %, preferably 150 - 2500 %, more preferably 250 - 2000 %, even more preferably 250 - 2000 %.

The thermally expandable compositions according to the present invention can be produced by mixing the constituents in any suitable mixing apparatus, for example in a dispersion mixer, planetary mixer, such as planetary roller, extruder such as a twin screw extruder, kneader, such as a Buss, Banbury, or roller kneader, or a two-roll mill.

It may be advantageous to heat the constituents before or during mixing, either by applying external heat sources or by friction generated by the mixing process itself, in order to facilitate processing of the components into a homogeneously mixed mixture by decreasing viscosities and/or melting of individual components. However, care has to be taken, for example by temperature monitoring and using cooling devices where appropriate, not to exceed the activation temperatures of the at least one chemical blowing agent **CBA** and of the at least one free radical initiator **I**. The thus obtained thermally expandable composition is preferably essentially solid at normal room temperature (23 °C), meaning that it does not visibly deform at this temperature just by means of gravity during a period of at least 24 h.

After mixing of the constituents of the thermally expandable composition, the thus obtained composition may be shaped into its desired form by, for example, extruding, blow-molding, pelleting, injection molding, compression molding, punching, or stamping or using any other suitable process.

The thermally expandable composition of the present invention may be produced in a substantially one-step

process, involving the addition of all constituents in a series and/or simultaneously. However, it may also be advantageous to provide the thermally expandable composition as a two-part system, or even multipart system. In these cases, the constituents of the thermally expandable composition are provided in separate air- and moisture impermeable packages or compartments of a single package and they are mixed with each other and optionally with other compounds at the time of use or immediately before the time of use of the thermally expandable composition. Such an approach may, for example, be taken to increase shelf life of the thermally expandable composition in places with demanding conditions (such as extraordinarily high temperatures), to optimize storage room demand and transport weight, or to enable providing tailor-made, modular compositions for different applications.

The thermally expandable compositions according to the present invention are storage stable at normal storage conditions. The term "storage stable" refers in the present disclosure to materials, which can be stored at specified storage conditions for long periods of time, such as at least one month, in particular at least 3 months, without any significant changes in the application related properties of the material. The "typical storage conditions" refer here to temperatures of not more than 60°C, in particular not more than 50°C.

The expansion of the thermally expandable composition of the present invention is triggered by heating. This means that the thermally expandable composition is activated by a heating step that exceeds its activation temperature and exhibits a duration long enough for the decomposition of the at least one chemical blowing agent **CBA** (resulting in gas formation) to proceed until the expandable material has expanded and cured into its intended final (sufficiently expanded and stable) state. The optimal temperature and duration of the heating step (dwell time) depends on the embodiment of the thermally expandable composition, in particular on the composition of the at least one chemical blowing agent **CBA** and the at least one free radical initiator **I** contained in the thermally expandable composition. The thermally expandable composition may have an activation temperature in the range of 120 - 250 °C, preferably 140 - 220 °C, and a dwell time of the heating step in the range of 5 - 90 min, preferably 10 - 60 min.

The preferences given above for the at least one polymer **P**, the at least one epoxy-functional polymer **EP**, the at least one thermoplastic polymer **TP**, the at least one chemical blowing agent **CBA**, the at least one free radical initiator **I**, the at least one activator **A**, and the at least one co-agent **CA** apply equally for all subjects of the present invention unless stated otherwise.

Another subject of the present invention is a baffle and/or a reinforcement element for hollow structures comprising or essentially consisting of the thermally expandable composition of the present invention.

Such elements are used to seal, baffle, and/or reinforce hollow structures, for example, a cavity in a hollow structural part of an automobile. Hollow parts in cars may include body components (for example panels), frame components (for example, hydroformed tubes), pillar structures (for example, A, B, C, or D-pillars), bumpers, roofs, or the like.

According to one or more embodiments, the baffle and/or reinforcement element for hollow structures essentially consists of the thermally expandable composition of the present invention. In these embodiments, it is advantageous to provide the element with such a shape that it can be easily fitted into and attached to the walls of the hollow structure to be baffled and/or reinforced. Such shaped elements can be provided from the thermally expandable composition, for example, by injection molding, punching or stamping, or extrusion through a shape template.

According to one or more further embodiments, the baffle and/or reinforcement element further comprises a carrier on which the thermally expansible composition is deposited or attached. Such a design may be more cost-efficient and it may facilitate fixation of the baffle and/or reinforcement element on the walls of the structure to be baffled and/or reinforced, for example by incorporation of pins, bolts, or hooks on the carrier element. Furthermore, with a suitable design of the carrier element, the mechanical performance and stability of the baffle and/or reinforcement element can be improved.

The carrier of the baffle and/or reinforcement element, if used, may consist of any material that can be processed into a shape. Preferred materials for the carrier include polymeric materials, such as a plastic, elastomers, thermoplastics, blends thereof, and the like. Preferred thermoplastic materials include, without limitation, polymers such as polyurethanes, polyamides, polyesters, polyolefins, polysulfones, polyethylene terephthalates (PET), polyvinylchlorides (PVC), chlorinated polyolefins, and the like. Especially preferred are high-temperature stable polymers such as poly(phenyl ethers), polysulfones, polyethersulfones, polyamides, in particular polyamide 6, polyamide 6,6, polyamide 11, polyamide 12, and mixtures thereof. Other suitable materials for the carrier include metals, especially aluminum or steel, or naturally grown, organic materials, such as wood or other (pressed) fibrous materials. Also glassy or ceramic materials can be used. It is also possible to use any combination of such materials. It is also contemplated that such materials can be filled, for example, with fibers, minerals, clays, silicates, carbonates, combinations thereof, or the like, or be foamed.

The carrier element can further exhibit any shape or geometry. It can also consist of several, not directly connected parts. For example, it can be massive, hollow, or foamed, or it can exhibit a grid-like structure. The surface of the carrier element can typically be smooth, rough, or structured, according to the intended use of the baffle and/or reinforcement element.

Another subject of the present invention is a process for manufacturing a baffle and/or reinforcement element of the present invention, wherein the thermally expandable composition is injection-molded onto a carrier or co-extruded

with a carrier.

The details of the manufacturing process of a baffle and/or reinforcement element of the present invention depends largely on the material of the carrier. If the material of the carrier can be (injection-) molded or extruded, the baffle and/or reinforcement element can be produced in a two-step injection-molding process or by co-extruding the carrier and the thermally expandable composition.

In case of a two-step injection molding process, the first step comprises injecting the material of the carrier into a mold. After solidification, the cavity of the injection molding tool is enlarged or adjusted or the injection-molded piece is transferred into another tool followed by a second step comprising injecting of the thermally expandable composition.

In case the carrier cannot be shaped by injection-molding or extrusion, for example, because it is composed of a metal or an alloy, the carrier may be first manufactured by a suitable process and then introduced into an injection-molding tool. The thermally expandable composition may then be injection-molded into the tool where the carrier was previously placed. Another possibility is to extrude the thermally expandable composition onto a prefabricated carrier element. Of course there is also the possibility of manufacturing the carrier and an element of the thermally expandable composition individually by any suitable process, and then attaching the element of the thermally expandable composition to the carrier by any suitable means, such as chemically or physically, for example by gluing or the like, or mechanically, for example, by bolting, screwing, or the like.

Another subject of the present invention is use of at least one compound having silane groups of formula (I) to improve humidity storage resistance of a thermally expandable material comprising the components a) to c) and optionally d) of the thermally expandable composition of the present invention.

The expression "use of at least one compound to improve humidity storage resistance of a thermally expandable material" is understood to mean that the expansion loss of the thermally expandable material resulting from storage in humid conditions at an elevated temperature is reduced as a result of addition of the at least one compound to the thermally expandable material.

According to one or more embodiments, the at least one compound having silane groups of formula (I) is selected from the group consisting of silane-functionalized polymers containing silane groups of formula (I) and alkoxysilanes of formula (II), wherein the silane-functionalized polymers containing silane groups of formula (I) are preferably selected from the group consisting of silane-grafted ethylene-vinyl acetate copolymers, olefin silane copolymers, and olefin alkyl (meth)acrylate silane terpolymers.

According to one or more embodiments, at least one compound containing silane groups of formula (I) is added to the thermally expandable material in such an amount that the thermally expandable material comprises 0.05 - 10.0 wt.-%, preferably 0.15 - 7.5 wt.-%, more preferably 0.20 - 5.0 wt.-%, even more preferably 0.25 - 3.5 wt.-% of silane groups of formula (I), based on the total weight of the thermally expandable material.

Another subject of the present invention is the use of the baffle and/or reinforcement element of the present invention for sealing, baffling, or reinforcing of a cavity or a hollow structure of a land-, water-, or air-vehicle, preferably an automotive vehicle, and/or a cavity of a building such that the transmission of noise, vibrations, humidity, and/or heat is reduced, and/or the structure surrounding said cavity or hollow structure is mechanically strengthened.

Still another subject of the present invention is a method for sealing, baffling and/or reinforcing a cavity or a hollow structure, wherein an element comprising a thermally expandable composition according the present invention is introduced into said cavity or hollow structure and subsequently expanded by heat and/or by UV-treatment such that said cavity or hollow structure is at least partially filled by the expanded composition.

The temperature of the thermal expansion step is preferably 140 - 250 °C, more preferably of 150 - 220 °C, even more preferably 150 - 200 °C. Preferred duration of the thermal expansion step, i.e. preferred baking time of the thermally expandable composition, is 5 - 90 min, more preferably 10 - 60 min, even more preferably 10-30 min.

Regarding the thermal activation of the element comprising the thermally expandable composition when used in manufacturing of automotive vehicles, it is advantageous to couple the thermal activation with another process step involving heat treatment. An example of such a process step is the electrocoating (cathodic dip painting/coating) of the chassis of a car body.

## Examples

The followings chemicals shown in Table 1 were used in formulating the thermally expandable compositions.

Table 1

| | |
|---|---|
| *Polymer* ***P*** | Terpolymer of ethylene with 17 wt.-% butyl acrylate and 2 wt.-% vinyl silane, Melt flow rate (190 °C, 2.16 kg) 5 g/10 min (ISO 1133), melting point DSC 96 °C (ISO 3146) |
| *Alkoxysilane* ***SI*** | Trimethoxy vinylsilane |

(continued)

| | |
|---|---|
| *Polymer* ***TP1*** | Ethylene-vinyl acetate copolymer, Melt flow rate (190 °C, 2.16 kg) 150 g/10 min (ASTM D1238), melting point DSC 80-90 °C (ASTM D 3418) |
| *Polymer* ***TP2*** | Ethylene-vinyl acetate copolymer, Melt flow rate (190 °C, 2.16 kg) 6 g/10 min (ASTM D1238), melting point DSC 70-80 °C (ASTM D 3418) |
| *Polymer* ***EP*** | Copolymer of ethylene and glycidyl methacrylate , 5-10 wt.-% of glycidyl methacrylate, Melt flow rate (190 °C/2.16 kg) of 2.5-5 g/10 min (ISO 1133) |
| *Initiator* ***I1*** | 1,1-Di-(tert.-butylperoxy)-3,3,5-trimethylcyclohexane (40 wt.-%) on calcium carbonate |
| *Initiator* ***I2*** | Di-(2-tert.-butyl-peroxyisopropyl)-benzene (40 wt.-%) on calcium carbonate and silica |
| *Blowing agent* ***CBA*** | Azodicarbonamide, maximum decomposition peak measured by DSC* 175 - 200 °C |
| *Co-agent* ***CA*** | Dipentaerythritol pentaacrylate |
| *Activator* ***A*** | Urone derivative |
| *Secondary activator* ***SA1*** | Zinc oxide |
| *Secondary activator* ***SA2*** | Stearic acid |
| *Wax* | Polyethylene wax, DSC peak melting point 110-120 °C (ASTM D3954) |
| *Tackifier* | Aromatically modified hydrocarbon resin, softening point 90-100 °C (E-950) |
| *Filler* | $CaCO_3$ |
| * Determined by DSC822e differential scanning calorimeter from Mettler-Toledo by keeping the sample for 2 min at 25°C, then heating the sample from 25°C to 280 °C at a rate of 5 °C/min, then keeping the sample for 2 min at 280°C and finally cooling the sample from 280°C to 25 °C at a rate of 10°C/min | |

Preparation of the thermally expandable compositions

The thermally expandable compositions comprising the constituents as shown in Tables 3 and 4 were prepared using a Brabender mixer with temperature control. In the preparation process, polymer constituents were first mixed at a temperature 110 - 115 °C until a homogeneously mixed mixture was obtained. The system was then cooled below activation of heat reactive raw materials (80-90 °C). Heat reactive raw materials (free radical initiator, blowing agent) were then mixed into the system until a homogeneously mixed mixture was obtained. The thus obtained material was subsequently hot-pressed into test samples that were used for volume expansion testing.

In case of the reference composition Ref-2 and the exemplary compositions Ex-1 to Ex-5, pre-mixes 1 to 6 comprising the constituents as shown in Table 2 were used in preparing the thermally expandable compositions. The pre-mixes were prepared by using the following procedure. Polymers **TP1** and **TP2** were first mixed using a Brabender mixer at a temperature of 100 °C for three minutes. Alkoxysilane **SI** and/or the free radical initiator **I1** (organic peroxide) were then added and mixing was continued at the same temperature for 10 minutes. In the last step, the temperature was increased to 160 °C and the mixing was continued for another 15 minutes. The pre-mixes used in preparing the exemplary compositions Ex-1 to Ex-5 are considered to contain a mixture of two different silane-grafted ethylene-vinyl acetate copolymers.

Volume expansion and expansion loss after humidity storage

Expansion properties of the reference and exemplary compositions were tested by heat treating (baking) the prepared test samples at temperatures of 140 and 200 °C for 10 minutes in an oven. The heating ramp from room temperature (23 °C) to the respective baking temperature was 20 min (to both 140 °C and 200 °C). The temperatures and magnitude of expansion (in % based on the original volume prior to expansion) at the corresponding baking temperatures are shown in Table 3 and 4.

Volumetric expansions rates were determined by measuring the density of the tested sample before and after the expansion. The densities were determined according to DIN EN ISO 1183 using the water immersion method (Archimedes principle) in deionised water and a precision balance to measure the mass.

The expansion properties were tested before ("initial") and after a humidity storage treatment. In the humidity storage treatment, the samples were stored before the baking at a relative humidity of 100 % and at a temperature of

40 °C for a time period of 7 days. "An expansion loss" (in %) describing the humidity resistance of the tested thermally expandable composition was calculated as

$$Expansion\ loss = \frac{(Exp_i - Exp_h)}{Exp_h} \cdot 100\ \%$$

wherein $Exp_i$ is the initial expansion obtained with the tested composition before the humidity storage treatment whereas $Exp_h$ is the expansion obtained after the humidity storage treatment.

Table 2

| Composition, wt.-% | Pre-mix 1 | Pre-mix 2 | Pre-mix 3 | Pre-mix 4 | Pre-mix 5 | Pre-mix 6 |
|---|---|---|---|---|---|---|
| Polymer TP1 | 64.87 | 64.04 | 64.55 | 63.91 | 62.98 | 61.79 |
| Polymer TP2 | 34.93 | 34.48 | 34.76 | 34.41 | 33.91 | 33.27 |
| Alkoxysilane SI | - | 1.48 | 0.50 | 1.47 | 2.91 | 4.75 |
| Initiator I1 | 0.20 | - | 0.20 | 0.20 | 0.19 | 0.19 |
| Total | 100.00 | 100.00 | 100.00 | 100.00 | 100.00 | 100.00 |

Table 3

| Composition, wt.-% | Ref-1 | Ref-2 | Ex-1 | Ex-2 | Ex-3 | Ex-4 | Ex-5 |
|---|---|---|---|---|---|---|---|
| Polymer TP1 | 37.04 | - | - | - | - | - | - |
| Polymer TP2 | 19.96 | - | - | - | - | - | - |
| Polymer EP | 15.00 | 15.00 | 15.00 | 15.00 | 15.00 | 15.00 | 15.00 |
| Pre-mix 1 | - | 57.00 | - | - | - | - | - |
| Pre-mix 2 | - | - | 57.00 | - | - | - | - |
| Pre-mix 3 | - | - | - | 57.00 | - | - | - |
| Pre-mix 4 | - | - | - | - | 57.00 | - | - |
| Pre-mix 5 | - | - | - | - | - | 57.00 | - |
| Pre-mix 6 | - | - | - | - | - | - | 57.00 |
| Initiator I1 | 1.50 | 1.50 | 1.50 | 1.50 | 1.50 | 1.50 | 1.50 |
| Initiator I2 | 3.20 | 3.20 | 3.20 | 3.20 | 3.20 | 3.20 | 3.20 |
| Blowing agent CBA | 9.50 | 9.50 | 9.50 | 9.50 | 9.50 | 9.50 | 9.50 |
| Co-agent CA | 2.20 | 2.20 | 2.20 | 2.20 | 2.20 | 2.20 | 2.20 |
| Activator A | 3.10 | 3.10 | 3.10 | 3.10 | 3.10 | 3.10 | 3.10 |
| Secondary activator SA1 | 3.50 | 3.50 | 3.50 | 3.50 | 3.50 | 3.50 | 3.50 |
| Wax | 5.00 | 5.00 | 5.00 | 5.00 | 5.00 | 5.00 | 5.00 |
| Total | 100.00 | 100.00 | 100.00 | 100.00 | 100.00 | 100.00 | 100.00 |
| Amount of alkoxysilane SI | 0.00 | 0.00 | 0.84 | 0.28 | 0.84 | 1.66 | 2.71 |
| **Expansion properties** | | | | | | | |
| Expansion @140 °C, [%] | 2322 | 2385 | 2264 | 2295 | 2144 | 2223 | 2230 |
| Expansion @200 °C, [%] | 1926 | 1874 | 2034 | 1965 | 1788 | 1706 | 1755 |
| Expansion 7d CKD @140 °C, [%] | 1546 | 1504 | 1617 | 1504 | 1726 | 1640 | 1659 |
| Expansion 7d CKD @200 °C, [%] | 801 | 731 | 1197 | 1099 | 1244 | 1035 | 1231 |

(continued)

| Expansion properties | | | | | | | |
|---|---|---|---|---|---|---|---|
| Expansion loss @140 °C, [%] | 33 | 37 | 29 | 34 | 19 | 26 | 26 |
| Expansion loss @200 °C, [%] | 58 | 61 | 41 | 44 | 30 | 39 | 30 |

Table 4

| Composition, wt.-% | Ref-3 | Ex-6 |
|---|---|---|
| Polymer P | - | 45.18 |
| Polymer TP1 | 29.62 | - |
| Polymer TP2 | 15.61 | - |
| Polymer EP | 12.07 | 12.08 |
| Initiator I1 | 1.23 | 1.23 |
| Initiator I2 | 2.47 | 2.47 |
| Blowing agent CBA | 7.82 | 7.83 |
| Co-agent CA | 1.74 | 1.74 |
| Activator A | 2.56 | 2.56 |
| Secondary activator SA1 | 2.91 | 2.91 |
| Secondary activator SA2 | 0.91 | 0.91 |
| Wax | 4.01 | 4.02 |
| Tackifier | 13.54 | 13.55 |
| Filler | 5.52 | 5.52 |
| Total | 100.00 | 100.00 |
| Amount of alkoxysilane SI | 0.00 | 0.904 |
| **Expansion properties** | | |
| Expansion @140 °C, [%] | 1967 | 1884 |
| Expansion @200 °C, [%] | 1992 | 1927 |
| Expansion 7d CKD @140 °C, [%] | 1338 | 1526 |
| Expansion 7d CKD @200 °C, [%] | 1693 | 1927 |
| Expansion loss @140 °C, [%] | 32 | 19 |
| Expansion loss @200 °C, [%] | 15 | 0 |

## Claims

**1.** A thermally expandable composition comprising:

a) At least one polymer **P**,
b) Optionally at least one free radical initiator **I**, and
c) At least one chemical blowing agent **CBA**, and
d) Optionally at least one epoxy-functional polymer **EP**,
wherein the composition comprises silane groups of formula (I)

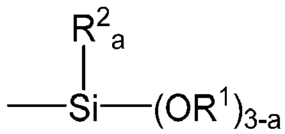

(I)

wherein $R^1$ represents an alkyl group with 1 to 8 carbon atoms, preferably with 1 to 5 carbon atoms, $R^2$ represents an alkyl group with 1 to 8 carbon atoms, preferably between 1 to 5 carbon atoms, and index a has a value of 0, 1 or 2, preferably 0 or 1.

2. The thermally expandable composition according to claim 1 comprising 0.05 - 10.0 wt.-%, preferably 0.15 - 7.5 wt.-% of the silane groups of formula (I), based on the total weight of the thermally expandable composition.

3. The thermally expandable composition according to claim 1 or 2, wherein at least a portion of the silane groups of formula (I) are bonded to the at least one polymer **P** and/or the composition further comprises at least one alkoxysilane **SI** of formula (II)

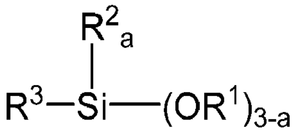

(II),

wherein $R^1$ and $R^2$ are as defined in any one of previous claims and $R^3$ represents a linear, branched, or cyclic, alkenyl groups with 1 to 20 carbon atoms, preferably with 1 to 10 carbon atoms.

4. The thermally expandable composition according claim 3, wherein the at least one alkoxysilane **SI** of formula (II) is selected from the group consisting of vinyltrimethoxysilane, vinyltriethoxysilane, vinyl-tris(2-methoxyethoxy)silane, 3-methacryloxypropyltrimethoxysilane, 3-methacryloxypropyltriethoxysilane, vinyldimethylmethoxysilane, and vinylmethyldibutoxysilane, preferably from the group consisting of vinyltrimethoxysilane and vinyltriethoxysilane.

5. The thermally expandable composition according to any one of previous claims, wherein the at least one polymer **P** is a silane-functionalized polymer containing silane groups of formula (I).

6. The thermally expandable composition according to any one of previous claims, wherein the at least one polymer **P** is selected from the group consisting of silane-grafted ethylene-vinyl acetate copolymers, olefin silane copolymers, and olefin alkyl (meth)acrylate silane terpolymers.

7. The thermally expandable composition according to any one of previous claims comprising at least one free radical initiator **I**, preferably a peroxide initiator **PI**, more preferably an organic peroxide.

8. The thermally expandable composition according to any one of previous claims further comprising at least one epoxy-functional polymer **EP**, preferably selected from the group consisting of olefin glycidyl (meth)acrylate copolymers, olefin alkyl acrylate glycidyl (meth)acrylate terpolymers, and glycidyl (meth)acrylate grafted copolymers, wherein the at least one epoxy-functional polymer **EP** preferably comprises 5-30 wt.-%, preferably 10 - 25 wt.-% of the total weight of the thermally expandable composition.

9. The thermally expandable composition according to any one of previous claims further comprising at least one activator **A** comprising at least one compound of formula (III)

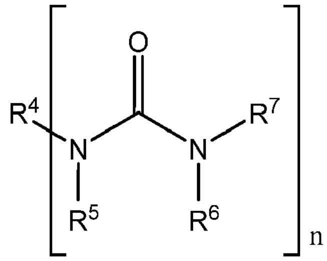

(III)

wherein $R^4$ and $R^5$ represent independently of each other hydrogen atoms or monovalent alkyl radicals with 1 to 10 carbon atoms which furthermore optionally comprise oxygen atoms, nitrogen atoms, and/or aromatic moieties or together form a divalent alkyl radical with 1 to 10 carbon atoms and which furthermore optionally comprises oxygen atoms, nitrogen atoms, or aromatic moieties;
$R^6$ and $R^7$ represent independently of each other hydrogen atoms or monovalent alkyl radicals with 1 to 10 carbon atoms which furthermore optionally comprise oxygen atoms or nitrogen atoms; and
index n has a value of 1 or 2.

**10.** The thermally expandable composition according any one of previous claims further comprising at least one co-agent **CA** comprising at least one multifunctional acrylate with an acrylate functionality of at least 2, preferably between 2 and 6 and preferably having a molecular weight of less than 2500 g/mol, more preferably less than 1000 g/mol.

**11.** Use of at least one compound having silane groups of formula (I) as defined in claim 1 to improve humidity storage resistance of a thermally expandable material comprising the components a) to d) of the thermally expandable composition as defined in any one of previous claims.

**12.** Baffle and/or a reinforcement element for hollow structures comprising a thermally expandable composition according to any one of claims 1-10.

**13.** Baffle and/or reinforcement element of claim 12 further comprising a carrier on which the thermally expandable composition is deposited or attached.

**14.** A process for manufacturing a baffle and/or reinforcement element according to claim 13, wherein the thermally expandable composition is injection-molded onto the carrier or co-extruded with the carrier.

**15.** Use of the baffle and/or reinforcement element according to claim 12 or 13 for sealing, baffling, or reinforcing of a cavity or a hollow structure of a land-, water-, or air-vehicle, preferably an automotive vehicle, and/or a cavity of a building such that the transmission of noise, vibrations, humidity, and/or heat is reduced, and/or the structure surrounding said cavity is mechanically strengthened.

**16.** Method for sealing, baffling and/or reinforcing a cavity or hollow structure, wherein an element comprising a thermally expandable composition according to any of claims 1-10 is introduced into said cavity or hollow structure and subsequently expanded by heat such that said cavity or hollow structure is at least partially filled by the expanded composition.

European Patent Office / Europäisches Patentamt / Office européen des brevets

# EUROPEAN SEARCH REPORT

Application Number
EP 20 15 7447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2003/166733 A1 (MIYAZAKI KENJI [JP] ET AL) 4 September 2003 (2003-09-04)<br>*whole document, in particular example 4*<br>----- | 1-3,5,6,11<br>1-16 | INV.<br>C08J9/00<br>C08J9/10<br>C08K5/5419 |
| X | US 2018/160767 A1 (GOPALAN KRISHNAMACHARI [US] ET AL) 14 June 2018 (2018-06-14)<br>* examples 8,9 *<br>----- | 1-3,5,11 | |
| X | US 2003/199597 A1 (ABE SHIGEHIKO [JP]) 23 October 2003 (2003-10-23)<br>* example 1 *<br>----- | 1-3,5,11 | |
| X | CN 104 403 192 A (GRN GROUP CO LTD) 11 March 2015 (2015-03-11)<br>*embodiments*<br>----- | 1-4,7,11 | |
| X | US 2012/322905 A1 (KUSANOSE YASUHIRO [JP] ET AL) 20 December 2012 (2012-12-20)<br>* example 1 *<br>----- | 1-4,7,11 | |
| X | US 4 160 072 A (SHINKAI KEN ET AL) 3 July 1979 (1979-07-03)<br>* example 1 *<br>----- | 1-4,7,11 | TECHNICAL FIELDS SEARCHED (IPC)<br>C08J<br>C08K |
| X | CN 109 485 982 A (JIAXING BOFA NOVEL PLASTIC CO LTD) 19 March 2019 (2019-03-19)<br>* examples *<br>----- | 1-4,7,11 | |
| Y | WO 2019/134842 A1 (SIKA TECH AG [CH]) 11 July 2019 (2019-07-11)<br>* the whole document *<br>----- | 1-16 | |

1 The present search report has been drawn up for all claims

| Place of search | Date of completion of the search | Examiner |
|---|---|---|
| The Hague | 15 July 2020 | Rinkel, Bert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 15 7447

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2020

| Patent document cited in search report | Publication date | Patent family member(s) | Publication date |
|---|---|---|---|
| US 2003166733 A1 | 04-09-2003 | EP 1312465 A1 | 21-05-2003 |
| | | JP WO2002016124 A1 | 15-01-2004 |
| | | US 2003166733 A1 | 04-09-2003 |
| | | US 2005287342 A1 | 29-12-2005 |
| | | US 2005287346 A1 | 29-12-2005 |
| | | WO 0216124 A1 | 28-02-2002 |
| US 2018160767 A1 | 14-06-2018 | BR 112019011570 A2 | 22-10-2019 |
| | | CA 3046013 A1 | 14-06-2018 |
| | | CN 109310179 A | 05-02-2019 |
| | | CN 109563329 A | 02-04-2019 |
| | | CN 110352129 A | 18-10-2019 |
| | | EP 3411438 A1 | 12-12-2018 |
| | | EP 3551003 A1 | 16-10-2019 |
| | | EP 3551453 A1 | 16-10-2019 |
| | | JP 2019520450 A | 18-07-2019 |
| | | JP 2020500650 A | 16-01-2020 |
| | | JP 2020509260 A | 26-03-2020 |
| | | KR 20190008200 A | 23-01-2019 |
| | | KR 20190009285 A | 28-01-2019 |
| | | KR 20190093215 A | 08-08-2019 |
| | | KR 20190140096 A | 18-12-2019 |
| | | KR 20190140097 A | 18-12-2019 |
| | | US 2018160767 A1 | 14-06-2018 |
| | | US 2018162109 A1 | 14-06-2018 |
| | | US 2018163024 A1 | 14-06-2018 |
| | | US 2019021441 A1 | 24-01-2019 |
| | | US 2019029361 A1 | 31-01-2019 |
| | | US 2019045881 A1 | 14-02-2019 |
| | | WO 2018107066 A1 | 14-06-2018 |
| | | WO 2018107073 A1 | 14-06-2018 |
| | | WO 2018107118 A1 | 14-06-2018 |
| US 2003199597 A1 | 23-10-2003 | DE 60304076 T2 | 26-10-2006 |
| | | EP 1354912 A1 | 22-10-2003 |
| | | JP 4211410 B2 | 21-01-2009 |
| | | JP 2004002679 A | 08-01-2004 |
| | | US 2003199597 A1 | 23-10-2003 |
| CN 104403192 A | 11-03-2015 | NONE | |
| US 2012322905 A1 | 20-12-2012 | CN 102791782 A | 21-11-2012 |
| | | CN 104262772 A | 07-01-2015 |
| | | EP 2546291 A1 | 16-01-2013 |
| | | ES 2583329 T3 | 20-09-2016 |
| | | JP 5627136 B2 | 19-11-2014 |

EPO FORM P0459

For more details about this annex : see Official Journal of the European Patent Office, No. 12/82

page 1 of 2

# ANNEX TO THE EUROPEAN SEARCH REPORT ON EUROPEAN PATENT APPLICATION NO. EP 20 15 7447

This annex lists the patent family members relating to the patent documents cited in the above-mentioned European search report. The members are as contained in the European Patent Office EDP file on
The European Patent Office is in no way liable for these particulars which are merely given for the purpose of information.

15-07-2020

| Patent document cited in search report | Publication date | Patent family member(s) | Publication date |
|---|---|---|---|
| | | JP WO2011111696 A1 | 27-06-2013 |
| | | KR 20120129943 A | 28-11-2012 |
| | | KR 20140133889 A | 20-11-2014 |
| | | TW 201139540 A | 16-11-2011 |
| | | US 2012322905 A1 | 20-12-2012 |
| | | WO 2011111696 A1 | 15-09-2011 |
| US 4160072 A | 03-07-1979 | NONE | |
| CN 109485982 A | 19-03-2019 | NONE | |
| WO 2019134842 A1 | 11-07-2019 | EP 3508520 A1 | 10-07-2019 |
| | | WO 2019134842 A1 | 11-07-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102011080223 A1